# EUROPÄISCHE PATENTSCHRIFT

(11) **EP 3 443 394 B1**
(45) Veröffentlichungstag und Bekanntmachung des Hinweises auf die Patenterteilung: **04.06.2025**
(21) Anmeldenummer: 17715151.1
(22) Anmeldetag: 03.04.2017
(51) Int. Cl.: G02B 5/18, F21S 41/00

(54) **SCHEINWERFER MIT OPTISCHER ANORDNUNG**
HEADLIGHT COMPRISING OPTICAL ARRANGEMENT
PHARE COMPRENANT UN ARRANGEMENT OPTIQUE

(30) Priorität: 15.04.2016 DE 102016107011
(43) Veröffentlichungstag der Anmeldung: 20.02.2019
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: ECKSTEIN, Hans-Christoph, 07745 Jena (DE); ZEITNER, Uwe Detlef, 99423 Weimar (DE); HÖFER, Bernd, 07747 Jena (DE); ECKSTEIN, Wiebke, 07745 Jena (DE)
(74) Vertreter: Epping - Hermann - Fischer
(86) Internationale Anmeldenummer: PCT/EP2017/057865
(87) Internationale Veröffentlichungsnummer: WO 2017/178266

(56) Entgegenhaltungen:
- EP-A2- 2 492 579
- EP-A2- 2 492 579
- WO-A1-2013/117923
- WO-A1-2013/117923
- WO-A1-2015/140001
- WO-A1-2015/140001
- DE-A1- 10 334 250
- DE-A1- 102008 022 795
- DE-A1- 102008 022 795
- DE-A1- 102013 101 023
- DE-A1- 102013 101 023
- JP-A- 2012 146 621
- JP-A- 2012 146 621
- US-A1- 2010 053 711
- US-A1- 2010 053 711

## Beschreibung

Scheinwerfer mit einer optischen Anordnung Die Erfindung betrifft einen Scheinwerfer mit einer optischen Anordnung.

Diese Patentanmeldung beansprucht die Priorität der deutschen Patentanmeldung 10 2016 107 011. 4.

Aus der Druckschrift US 2008/0198372 A1 ist ein Kfz-Scheinwerfer bekannt, bei dem das von einer Lichtquelle abgestrahlte Licht durch einen räumlichen Lichtmodulator (SLM, Spatial Light Modulator) modifiziert wird, um eine gewünschte Lichtverteilung vor dem Fahrzeug zu erzielen. Der SLM weist eine zweidimensionale Anordnung von Pixeln auf, die in der Bildebene eine der Pixelanordnung entsprechende Lichtverteilung erzeugt.

Bei dieser Art der räumlichen Modulation der Lichtverteilung wird ausgenutzt, dass einzelne Pixel des SLM durch eine elektronische Ansteuerung transparent geschaltet werden können, während die übrigen Pixel reflektierend oder absorbierend sind. Auf diese Weise kann gezielt eine gewünschte Lichtverteilung hergestellt werden. Es wird dabei aber in Kauf genommen, dass das Licht der Lichtquelle, das auf die nicht transparenten Pixel auftrifft, für die gesamte emittierte Lichtleistung verloren geht.

Bei einer anderen bekannten Art zur Erzeugung einer räumlichen Lichtverteilung wird ein elektronisch angesteuerter Schwingspiegel zur Ablenkung eines Laserstrahls genutzt. Diese Methode erfordert allerdings ein hochfrequente und in der Regel aufwändige Ansteuerung des Schwingspiegels. Weiterhin ist diese Methode vergleichsweise anfällig gegenüber Vibrationen, was insbesondere bei der Anwendung in einem Kfz-Scheinwerfer problematisch sein kann.

Der Erfindung liegt die Aufgabe zugrunde, ein optische Anordnung für einen Scheinwerfer anzugeben, mit der eine gewünschte räumliche Abstrahlcharakteristik des Scheinwerfers gezielt einstellbar ist, ohne dass dabei wesentliche Anteile der von der Lichtquelle emittierten Lichtleistung durch Reflexion oder Absorption verloren gehen. Weiterhin soll die optische Anordnung vergleichsweise unempfindlich gegenüber Vibrationen sein.

Diese Aufgabe wird durch den Scheinwerfer gemäß dem unabhängigen Anspruch 1 gelöst. Vorteilhafte Ausgestaltungen und Weiterbildungen der Erfindung sind Gegenstand der abhängigen Ansprüche.

Der Scheinwerfer umfasst eine optische Anordnung und umfasst weiterhin mindestens eine Blende zur Absorption von Licht, das von dem diffraktiven optischen Element in Beugungsordnungen außerhalb der ersten Beugungsordnung abgelenkt wird. Die mindestens eine Blende ist derart angeordnet, dass Licht, das in die 0. Beugungsordnung, in die 2. Beugungsordnung, in höhere Beugungsordnungen oder in negative Beugungsordnungen (-1. Beugungsordnung, -2. Beugungsordnung, u.s.w.) emittiert wird, von der Blende absorbiert wird.

Bei dem Scheinwerfer mit optischer Anordnung wird eine gewünschte räumliche Abstrahlcharakteristik des Scheinwerfers dadurch erzeugt, dass mittels des diffraktiven optischen Elements eine gewünschte Intensitätsverteilung in der ersten Beugungsordnung erzielt wird. Hierbei ist es möglich, den überwiegenden Teil der emittierten optischen Leistung in die erste Beugungsordnung abzulenken und gleichzeitig eine gewünschte räumliche Abstrahlcharakteristik einzustellen. Die Modifikation der Lichtverteilung erfolgt bei dem Scheinwerfer mit optischer

Anordnung nicht durch eine einstellbare Absorption oder Reflexion, was Verluste zur Folge hätte, sondern durch eine gezielte Verteilung der Lichtleistung in Beugungsordnungen.

Durch eine Berechnung der Phasenfunktion des diffraktiven optischen Elements mit einem iterativen Fourier-Transformations-Algorithmus (IFTA, iterative Fourier Transform Algorithm) kann die Intensität in der ersten Beugungsordnung mit hoher Ortsauflösung kontrolliert werden. Damit lassen sich mit dem Scheinwerfer nahezu beliebige Intensitätsverteilungen generieren, wobei nahezu die gesamte Lichtenergie genutzt werden kann. Die Herstellung eines diffraktiven optischen Elements unter Verwendung eines iterativen Fourier-Transformations-Algorithmus ist an sich aus der Druckschrift DE 102013003441 A1 bekannt und wird daher an dieser Stelle nicht näher erläutert.

Gegenüber einer Erzeugung einer räumlichen Intensitätsverteilung, bei der ein Schwingspiegel eingesetzt wird, besteht der Vorteil der hier beschriebenen Scheinwerfer mit optischer Anordnung insbesondere in einer geringeren Vibrationsempfindlichkeit und einem größerem Lichtleitwert (Etendue) der optischen Anordnung. Eine hochfrequente Modulation der Laserlichtquelle und eine aufwändige synchrone Datenaufbereitung ist vorteilhaft nicht notwendig.

Bei der Erfindung werden mindestens 80 % der von der mindestens einen Laserlichtquelle emittierten Lichtleistung in die erste Beugungsordnung gebeugt. Besonders bevorzugt werden sogar mindestens 85% der emittierten Lichtleistung in die erste Beugungsordnung gebeugt. Somit kann ein sehr hoher Anteil der emittierten Lichtleistung von dem Scheinwerfer emittiert werden.

Bei einem Ausfall des diffraktiven optischen Elements entsteht bei der optischen Anordnung vorteilhaft ausschließlich die 0. Beugungsordnung, die an der Blende absorbiert wird. Dies ist insbesondere aufgrund der Verwendung einer Laserlichtquelle aus Sicherheitsgründen vorteilhaft. Im Gegensatz dazu könnte beispielsweise bei der nicht erfindungsgemäßen Verwendung eines Schwingspiegels zur Strahlablenkung bei einem Ausfall der elektronischen Ansteuerung die Gefahr bestehen, dass eine hohe Lichtleistung auf einen Punkt konzentriert aus dem Scheinwerfer emittiert wird. Bei der hierin beschriebenen optischen Anordnung kann eine Messung der Intensität in der Blendenebene außerdem für eine Sicherheitsabschaltung genutzt werden. Die optische Anordnung kann hierzu beispielweise einen Detektor im Bereich der Blende für eine solche Sicherheitsabschaltung aufweisen.

Gemäß zumindest einer Ausgestaltung weist das diffraktive optische Element eine zeitlich veränderbare Beugungsstruktur auf. In diesem Fall ist die Beugungsstruktur insbesondere durch eine elektronische Ansteuerung zeitlich veränderbar.

Bei dieser Ausgestaltung ist das diffraktive optische Element vorzugsweise ein phasenschiebendes LCoS-Display (Liquid Crystal on Silicon) oder ein phasenschiebendes Mikrospiegel-Array (Piston Micromirror Array). Die elektronische Ansteuerung eines phasenschiebenden LCoS-Displays oder eines phasenschiebenden Mikrospiegel-Arrays ist vorteilhaft vergleichsweise einfach, insbesondere ist keine hochfrequente Modulation der Laserlichtquelle und keine aufwändige synchrone Datenaufbereitung notwendig.

Bei einer alternativen Ausgestaltung weist das diffraktive optische Element eine statische Beugungsstruktur auf. Die Beugungsstruktur ist in diesem Fall nicht zeitlich veränderbar. Bei dieser Ausgestaltung ist das diffraktive optische Element zum Beispiel ein Oberflächengitter oder ein computergeneriertes Hologramm (CGH). Das diffraktive optische Element kann beispielsweise als Transmissionsbeugungsgitter oder als Reflexionsbeugungsgitter ausgeführt sein. Die Herstellung des diffraktiven optischen Elements erfolgt beispielsweise lithografisch durch Herstellung einer Oberflächenstruktur in einem Träger. Der Träger kann hierbei insbesondere ein transparenter Träger sein. Die Oberflächenstruktur kann wie zuvor beschrieben beispielsweise mit einem iterativen Fourier-Transformations-Algorithmus berechnet werden, um eine gewünschte Phasenfunktion zu erzielen.

Bei einer Ausgestaltung der optischen Anordnung ist das diffraktive optische Element dazu eingerichtet, eine Rotationsbewegung um mindestens eine Achse und/oder eine Translationsbewegung in mindestens einer Richtung auszuführen. Insbesondere kann das diffraktive optische Element einen elektronisch ansteuerbaren Antrieb zur Durchführung der Rotationsbewegung oder Translationsbewegung aufweisen. Bei dieser Ausgestaltung kann durch die Bewegung des diffraktiven optischen Elements eine Veränderung der Lichtverteilung bewirkt werden, um beispielsweise die abgestrahlte Lichtverteilung an verschiedene Funktionen des Scheinwerfers anzupassen. Auf diese Weise kann auch bei Verwendung eines diffraktiven optischen Elements mit statischer Beugungsstruktur die emittierte Lichtverteilung variiert werden.

Gemäß einer vorteilhaften Ausgestaltung folgt dem diffraktiven optischen Element im Strahlengang eine Linse nach, die insbesondere zur Erzeugung eines Zwischenbildes des an dem diffraktiven optischen Element gebeugten Lichts geeignet ist. Die Linse fungiert insbesondere als Fourierlinse. Die Linse ist im Strahlengang der optischen Anordnung insbesondere zwischen dem diffraktiven optischen Element und der Blende angeordnet.

Bei einer Ausgestaltung ist die dem diffraktiven optischen Element nachfolgende Linse beweglich. In diesem Fall ist die Linse vorteilhaft dazu eingerichtet, eine Rotationsbewegung um mindestens eine Achse und/oder eine Translationsbewegung in mindestens einer Richtung auszuführen. Insbesondere kann die Linse einen elektronisch ansteuerbaren Antrieb zur Durchführung der Rotationsbewegung oder Translationsbewegung aufweisen. Im Fall einer Translationsbewegung wird die Linse beispielsweise senkrecht zur optischen Achse verschoben. Eine Rotationsbewegung der Linse kann die Strahlablenkung insbesondere dann beeinflussen, wenn die Linse nicht rotationssymmetrisch ist oder der Drehpunkt nicht auf der optischen Achse liegt. Durch die Bewegung der Linse kann eine Veränderung der Lichtverteilung bewirkt werden, um beispielsweise die abgestrahlte Lichtverteilung an verschiedene Funktionen des Scheinwerfers anzupassen. Auf diese Weise kann auch bei Verwendung eines diffraktiven optischen Elements mit statischer Beugungsstruktur die emittierte Lichtverteilung variiert werden. Bei Verwendung der beweglichen Linse muss das diffraktive optische Element selbst nicht beweglich sein, um die Lichtverteilung zeitlich zu variieren. Das bewegliche diffraktive optische Element und die bewegliche Linse stellen somit alternative Möglichkeiten dar, um mit einer statischen Beugungsstruktur eine veränderbare Lichtverteilung zu ermöglichen und auf diese Weise die Abstrahlcharakteristik des Scheinwerfers an verschiedene Beleuchtungssituationen anzupassen.

Gemäß zumindest einer Ausgestaltung ist die mindestens eine Laserlichtquelle ein Halbleiterlaser. Auf diese Weise lässt sich ein besonders kompakter Aufbau und eine hohe Effizienz erzielen.

Der Scheinwerfer mit optischer Anordnung kann vorteilhaft mehrere Laserlichtquellen, insbesondere mehrere Halbleiterlaser, aufweisen. Beispielsweise können mehrere Laserlichtquellen vorgesehen sein, deren Strahlen nebeneinander auf das diffraktive optische Element auftreffen. In diesem Fall kann die Strahlung der mehreren Laserlichtquellen durch eine dem diffraktiven optischen Element nachfolgende Linse, die als Fourierlinse fungiert, in einem Zwischenbild vereinigt werden. Bei einer weiteren Ausgestaltung können die Strahlen mehrerer Laserlichtquellen unter unterschiedlichen Winkeln auf das diffraktive optische Element auftreffen. Bei dieser Ausgestaltung kann ebenfalls die Strahlung der mehreren Laserlichtquellen durch eine dem diffraktiven optischen Element nachfolgende Linse, die als Fourierlinse fungiert, in einem Zwischenbild vereinigt werden. Die mehreren Laserlichtquellen können zur gezielten dreidimensionalen Einstellung einer Lichtverteilung genutzt werden, beispielsweise zur Fokussierung des emittierten Lichts in verschiedene Entfernungen.

Es ist auch möglich, dass die Strahlung mehrerer Laserlichtquellen schon vor dem Auftreffen auf das diffraktive optische Element vereinigt wird, zum Beispiel durch einen Strahlteilerwürfel. Auf diese Weise kann insbesondere die Strahlung mehrerer Laserlichtquellen mit unterschiedlichen Polarisationsrichtungen vereinigt werden, beispielsweise durch einen Polarisations-Strahlteilerwürfel. Die mehreren Laserlichtquellen können bei einer Ausgestaltung zur Emission von Licht verschiedener Farben vorgesehen sein. Insbesondere ist es möglich, dass die optische Anordnung mehrere Laserlichtquellen verschiedener Farben aufweist, um durch additive Farbmischung ein Mischlicht, insbesondere Weißlicht, zu erzeugen. Hierzu können beispielsweise Halbleiterlaser der Farben Rot, Grün und Blau vorgesehen sein. In diesem Fall ist es auch möglich, dass die optische Anordnung für eine oder mehrere der Farben mehrere Halbleiterlaser aufweist, wobei die Anzahl der Halbleiterlaser pro Farbe unterschiedlich sein kann (zum Beispiel 2x grün, 1x blau, 3x rot).

Bei einer weiteren vorteilhaften Ausgestaltung emittiert die mindestens eine Laserlichtquelle Licht im blauen oder ultravioletten Spektralbereich, wobei im Strahlengang zur Erzeugung von Weißlicht ein Konversionselement angeordnet ist, dass einen Teil des emittierten blauen oder ultravioletten Lichts in Licht einer größeren Wellenlänge konvertiert. Das Konversionselement kann mindestens einen Konversionsstoff aufweisen, welcher einen Teil des emittierten blauen oder ultravioletten Lichts absorbiert und Licht einer größeren Wellenlänge, beispielsweise gelbes Licht, emittiert, so dass durch Mischung des blauen oder ultravioletten Lichts mit dem beispielsweise gelben Licht des Konversionsstoffs weißes Mischlicht erzeugt wird.

Bei dem Scheinwerfer kann es sich insbesondere um einen Kfz-Scheinwerfer handeln.

Der Scheinwerfer kann im Strahlengang hinter der Blende der optischen Anordnung mindestens eine Projektionslinse aufweisen, welche beispielsweise dazu vorgesehen ist, die von der optischen Anordnung erzeugte Lichtverteilung aufzuweiten. Die Projektionslinse kann durch eine Anordnung mehrerer Linsen gebildet sein. Im Fall eines Kfz-Scheinwerfers wird beispielsweise die von der optischen Anordnung erzeugte Lichtverteilung durch die Projektionslinse auf die Straße projiziert. Eventuelle Abbildungsfehler der Projektionsoptik oder der Laserkollimation wie zum Beispiel Defokus, sphärische Aberration oder Farblängsfehler können durch eine Anpassung der im diffraktiven optischen Element erzeugten Phasenfunktion vorteilhaft kompensiert werden.

Mit der hierin beschriebenen optischen Anordnung können in einem Kfz-Scheinwerfer insbesondere verschiedene Lichtverteilungen, wie beispielsweise Abblendlicht, Fernlicht, Autobahnlicht oder Kurvenlicht, auf effiziente Weise erzeugt werden. Die Lichtverteilung kann wie zuvor beschrieben durch ein elektronisch ansteuerbares zeitlich veränderbares diffraktives optisches Element, durch ein elektronisch ansteuerbares bewegliches diffraktives optisches Element und/oder durch eine dem diffraktiven optischen Element im Strahlengang nachfolgende bewegliche Linse gezielt verändert werden. Auf diese Weise kann die Lichtverteilung an die verschiedenen Beleuchtungsfunktionen angepasst werden.

Bei der Verwendung eines zeitlich veränderbaren diffraktiven optischen Elements kann der Abstrahlwinkel des Scheinwerfers vorteilhaft in horizontaler oder vertikaler Richtung ohne mechanische Stellelemente variiert werden. Es ist beispielsweise möglich, in einem Kfz-Scheinwerfer eine Höhenkorrektur durch eine veränderbare vertikale lineare Phase des diffraktiven optischen Elements zu realisieren. Weiterhin kann beispielsweise ein Kurvenlicht durch eine veränderbare horizontale lineare Phase des diffraktiven optischen Elements realisiert werden.

Es sind weiterhin auch zusätzliche Funktionen mit der optischen Anordnung in dem Scheinwerfer realisierbar. Beispielsweise ist es möglich, Gefahren, Hindernisse oder sonstige Bereiche durch stärkere Beleuchtung oder eine veränderte Farbtemperatur oder Farbe hervorzuheben. Weiterhin ist es denkbar, Informationen auf die Straße zu projizieren oder beim Einschaltvorgang des Kfz-Scheinwerfers eine grafische Sequenz darzustellen.

Weitere vorteilhafte Ausgestaltungen des Scheinwerfers ergeben sich aus der folgenden Beschreibung von Ausführungsbeispielen im Zusammenhang mit den Figuren 1 bis 6.

Es zeigen:
Figuren 1 bis 4 jeweils eine schematische Darstellung eines Querschnitts durch eine optische Anordnung gemäß verschiedenen Ausführungsbeispielen, und
Figuren 5 und 6 eine schematische Darstellung eines Querschnitts durch einen Bereich des Scheinwerfers, der die Blende der optischen Anordnung und eine Projektionslinse aufweist.

Gleiche oder gleich wirkende Elemente sind in den Figuren jeweils mit den gleichen Bezugszeichen versehen. Die in den Figuren dargestellten Bestandteile sowie die Größenverhältnisse der Bestandteile untereinander sind nicht als maßstabsgerecht anzusehen.

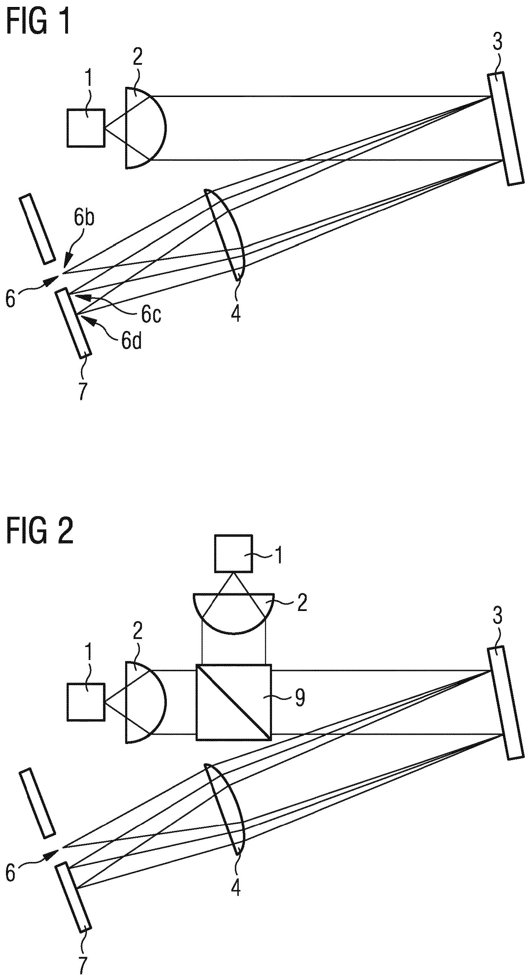

Das in Figur 1 dargestellte erste Ausführungsbeispiel der optischen Anordnung weist eine Laserlichtquelle 1 auf, die vorzugsweise ein Halbleiterlaser ist. Dem Halbleiterlaser folgt im Strahlengang eine Kollimationslinse 2 nach, um das emittierte Licht zu kollimieren. Das kollimierte Licht trifft in der optischen Anordnung auf ein diffraktives optisches Element 3 auf, das bei dem Ausführungsbeispiel der Figur 1 als reflektives diffraktives optisches Element ausgebildet ist. Durch das diffraktive optische Element 3 wird das Licht in mehrere Beugungsordnungen gebeugt, wobei in Figur 1 beispielhaft Lichtstrahlen der 1. Beugungsordnung 6b, der 0. Beugungsordnung 6c und der -1. Beugungsordnung 6d dargestellt sind.

Die gebeugten Lichtstrahlen werden durch eine dem diffraktiven optischen Element 3 im Strahlengang nachfolgende Linse 4 in ein Zwischenbild 6 abgebildet. Weiterhin folgt dem diffraktiven optischen Element 3 und der Linse 4 im Strahlengang eine Blende 7 nach, die so angeordnet ist, dass sie das Licht der ersten Beugungsordnung 6b durchlässt, aber das Licht anderer Beugungsordnungen absorbiert. Insbesondere werden an der Blende 7 beispielsweise die 0. Beugungsordnung 6c und die -1. Beugungsordnung 6d absorbiert.

Das diffraktive optische Element 3 weist eine Beugungsstruktur auf, die dazu geeignet ist, den überwiegenden Teil des emittierten Lichts in die erste Beugungsordnung 6b zu beugen. Es werden mindestens 80 % oder sogar mindestens 85 % der von der Laserlichtquelle 1 emittierten Lichtleistung in die erste Beugungsordnung 6b gebeugt. Die an der Blende 7 entstehenden Verluste durch die Absorption der übrigen Beugungsordnungen sind daher nur gering. Das diffraktive optische Element 3 weist eine Phasenfunktion auf, die vorzugsweise durch einen iterativen Fourier-Transformations-Algorithmus berechnet wird.

Das diffraktive optische Element 3 kann insbesondere ein zeitlich veränderbares diffraktives optisches Element wie beispielsweise ein phasenschiebendes LCoS-Display oder ein phasenschiebendes Mikrospiegel-Array (Piston Micromirror Array) sein. Auf diese Weise kann die Lichtverteilung in der ersten Beugungsordnung 6b, die durch die Blende 7 hindurch abgestrahlt wird, gezielt verändert werden, um die Abstrahlcharakteristik des Scheinwerfers an verschiedene Beleuchtungssituationen anzupassen. Beispielsweise kann die Abstrahlcharakteristik in vertikaler Richtung durch Änderung der Phase in vertikaler Richtung verändert werden. Im Fall eines Kfz-Scheinwerfers kann auf diese Weise beispielsweise eine Höhenregulierung erfolgen. Analog kann durch eine Änderung der Phase in horizontaler Richtung die Abstrahlcharakteristik in horizontaler Richtung geändert werden, um beispielsweise ein Kurvenlicht zu realisieren.

Es ist alternativ auch möglich, dass das diffraktive optische Element 3 eine statische Beugungsstruktur aufweist, die zeitlich nicht veränderbar ist. In diesem Fall kann eine zeitlich veränderbare Abstrahlcharakteristik dadurch erzeugt werden, dass das diffraktive optische Element 3 und/oder die Linse 4 durch eine elektronische Ansteuerung bewegbar sind. Hierbei sind sowohl eine Translationsbewegung als auch eine Rotationsbewegung des diffraktiven optischen Elements 3 und/oder der Linse 4 möglich.

Das in Figur 2 dargestellte zweite Ausführungsbeispiel einer optischen Anordnung unterscheidet sich von dem ersten Ausführungsbeispiel dadurch, dass die Lichtquelle durch zwei Laserlichtquellen 1 gebildet wird, bei denen es sich bevorzugt um zwei Halbleiterlaser 1 handelt. Hierbei wird durch den Einsatz eines Polarisations-Strahlteilerwürfels 9 Laserlicht zweier unterschiedlicher Polarisationsrichtungen erzeugt, das auf das diffraktive optische Element 3 gerichtet wird. Da das diffraktive optische Element 3 für das Licht der unterschiedlichen Polarisationsrichtungen unterschiedliche Beugungseigenschaften aufweisen kann, werden die Möglichkeiten zur gezielten Einstellung der dreidimensionalen Lichtverteilung durch die Verwendung von mehreren Laserlichtquellen mit verschiedenen Polarisationsrichtungen erweitert. Hinsichtlich weiterer vorteilhafter Ausgestaltungen entspricht das zweite Ausführungsbeispiel ansonsten dem ersten Ausführungsbeispiel.

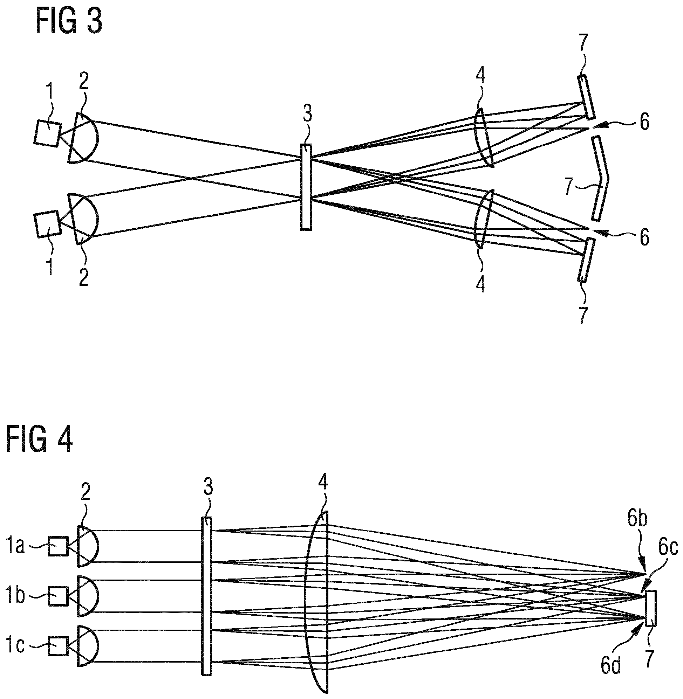

Bei einem dritten Ausführungsbeispiel der optischen Anordnung, das in Figur 3 dargestellt ist, werden wie bei dem zweiten Ausführungsbeispiel zwei Laserlichtquellen 1 eingesetzt. Die Abstrahlrichtungen der Laserlichtquellen 1 verlaufen bei diesem Ausführungsbeispiel schräg zueinander, so dass das emittierte Licht unter zwei verschiedenen Einfallswinkeln auf das diffraktive optische Element 3 auftrifft. Das diffraktive optische Element 3 ist in diesem Fall ein transmissives diffraktives optisches Element. Im Strahlengang folgen hinter dem transmissiven diffraktiven optischen Element 3 zwei Fourierlinsen 4, die jeweils ein Zwischenbild 6 erzeugen. Im Strahlengang hinter den Blenden 7 der optischen Anordnung können in dem Scheinwerfer eine oder mehrere Projektionslinsen angeordnet sein (hier nicht dargestellt), welche die in den beiden Zwischenbildern 6 erzeugten Lichtverteilungen kombiniert, so dass die Abstrahlcharakteristik des Scheinwerfers durch die Kombination aus beiden Lichtverteilungen gebildet ist.

Bei dem in Figur 4 dargestellten weiteren Ausführungsbeispiel enthält die optische Anordnung mehrere Laserlichtquellen 1a, 1b, 1c, bei denen es sich um Halbleiterlaser verschiedener Farben handelt. Insbesondere kann ein erster Halbleiterlaser 1a blaues Licht mit einer Wellenlänge von beispielsweise etwa 450 nm, ein zweiter Halbleiterlaser 1b grünes Licht mit einer Wellenlänge von beispielsweise etwa 520 nm und ein dritter Halbleiterlaser 1c rotes Licht mit einer Wellenlänge von beispielsweise etwa 635 nm emittieren. Es ist alternativ auch möglich, dass mehrere Halbleiterlaser einer Farbe verwendet werden, um den Anteil dieser Farbe bei der Farbmischung zu Weißlicht zu erhöhen und so gezielt eine bestimmte Farbtemperatur einzustellen. Beispielsweise wäre es möglich, einen blauen Halbleiterlaser, zwei grüne Halbleiterlaser und drei rote Halbleiterlaser einzusetzen. Auf diese Weise wird zum Beispiel der rote und grüne Farbanteil im emittierten Lichtspektrum erhöht.

Bei dem dargestellten Ausführungsbeispiel treffen die Lichtstrahlen der mehreren Halbleiterlaser 1a, 1b, 1c im Wesentlichen parallel zueinander auf das diffraktive optische Element 3, das wie bei dem vorherigen Ausführungsbeispiel als transmissives diffraktives optisches Element ausgebildet ist. Die von dem diffraktiven optischen Element 3 erzeugten Beugungsordnungen der einzelnen Laserstrahlen werden durch eine im Strahlengang nach dem diffraktiven optischen Element 3 angeordnete Linse 4 in ein gemeinsames Zwischenbild abgebildet, wobei in der Ebene des Zwischenbildes eine Blende 7 angeordnet ist, die Licht in Beugungsordnungen 6c, 6d außerhalb der ersten Beugungsordnung 6b absorbiert. Da das Licht der verschiedenfarbigen Halbleiterlaser 1a, 1b, 1c in der optischen Anordnung überlagert wird, kann durch additive Farbmischung der Farben rot, grün und blau vorteilhaft Weißlicht erzeugt werden.

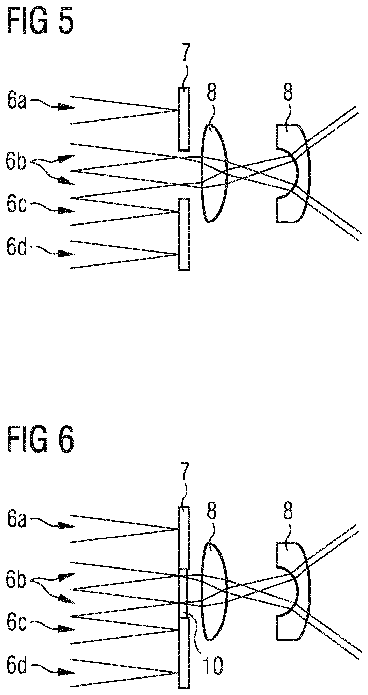

In Figur 5 ist ein Ausschnitt eines Bereichs des Scheinwerfers gemäß einem weiteren Ausführungsbeispiel dargestellt, der die Blende 7 und eine nachfolgende Projektionslinse 8 umfasst. Die optische Anordnung bis zur Blende 7 kann beispielsweise wie bei einem der vorherigen Ausführungsbeispiele ausgeführt sein und ist zur Vereinfachung hier nicht dargestellt. Auf die Blende 7 der optischen Anordnung treffen die von dem diffraktiven optischen Element 3 erzeugten Beugungsordnungen 6a, 6b, 6c, 6d auf. Die Blende 7 ist so angeordnet, dass das Licht der ersten Beugungsordnung 6b die Blende 7 passieren kann, während das Licht anderer Beugungsordnungen 6a, 6c, 6d an der Blende 7 absorbiert wird. Die von der Blende 7 durchgelassene erste Beugungsordnung 6b weist eine durch das diffraktive Element 3 erzeugte Lichtverteilung auf. Hinter der Blende 7 ist eine Projektionslinse 8 angeordnet, die bei dem hier dargestellten Ausführungsbeispiel aus einem zweiteiligen Linsensystem gebildet wird. Durch die Projektionslinse 8 kann beispielsweise der Abstrahlwinkel des Scheinwerfers vergrößert werden.

In Figur 6 ist ein weiteres Ausführungsbeispiel eines Bereichs des Scheinwerfers gemäß einem weiteren Ausführungsbeispiel dargestellt, der im Wesentlichen dem Ausführungsbeispiel der Figur 5 entspricht. Im Unterschied zum Ausführungsbeispiel der Figur 5 ist in der Ebene der Blende 7, insbesondere in der Durchlassöffnung der Blende 7, ein Konversionselement 10 angeordnet. Mittels des Konversionselements 10 kann aus dem Laserlicht in der ersten Beugungsordnung 6b vorteilhaft Weißlicht erzeugt werden.

Hierzu enthält beispielsweise die Laserlichtquelle der optischen Anordnung mindestens einen im blauen oder ultravioletten Spektralbereich emittieren Halbleiterlaser, und das Konversionselement 10 weist mindestens einen Konversionsstoff auf, der dazu geeignet ist, einen Teil des blauen oder ultravioletten Lichts in eine komplementäre Farbe, beispielsweise in gelbes Licht, zu konvertieren. Durch Farbmischung des blauen oder ultravioletten Lichts und des von dem Konversionsstoff emittierten komplementären Lichts entsteht vorteilhaft ein weißes Mischschicht, das von dem Scheinwerfer emittiert wird.

## Patentansprüche

1. Scheinwerfer mit einer optischen Anordnung, wobei die optische Anordnung umfasst:
- mindestens eine Laserlichtquelle (1),
- ein diffraktives optisches Element (3), das dazu eingerichtet ist, von der Laserlichtquelle (1) emittiertes Licht in mehrere Beugungsordnungen zu beugen, wobei ein überwiegender Teil des Lichts in die erste Beugungsordnung (6b) gebeugt wird, und
- mindestens eine Blende (7), die das Licht der ersten Beugungsordnung durchlässt und Licht in Beugungsordnungen (6a, 6c, 6d) außerhalb der ersten Beugungsordnung (6b) absorbiert,
wobei eine Phasenfunktion des diffraktiven optischen Elements (3) derart berechnet ist, dass mindestens 80 % der von der mindestens einen Laserlichtquelle (1) emittierten Lichtleistung in die erste Beugungsordnung gebeugt werden.

2. Scheinwerfer nach Anspruch 1,
wobei das diffraktive optische Element (3) eine zeitlich veränderbare Beugungsstruktur aufweist.

3. Scheinwerfer nach Anspruch 2,
wobei das diffraktive optische Element (3) ein phasenschiebendes LCoS-Display oder ein phasenschiebendes Mikrospiegel-Array ist.

4. Scheinwerfer nach Anspruch 1,
wobei das diffraktive optische Element (3) eine statische Beugungsstruktur aufweist.

5. Scheinwerfer nach Anspruch 4,
wobei das diffraktive optische Element (3) ein Oberflächengitter oder ein computergeneriertes Hologramm ist.

6. Scheinwerfer nach einem der vorhergehenden Ansprüche, wobei das diffraktive optische Element (3) dazu eingerichtet ist, eine Rotationsbewegung um mindestens eine Achse und/oder eine Translationsbewegung in mindestens einer Richtung auszuführen.

7. Scheinwerfer nach einem der vorhergehenden Ansprüche, wobei im Strahlengang nach dem diffraktiven optischen Element (3) eine Linse (4) zur Erzeugung eines Zwischenbildes (6) des an dem diffraktiven optischen Element (3) gebeugten Lichts angeordnet ist, und wobei die Linse (4) dazu eingerichtet ist, eine Rotationsbewegung um mindestens eine Achse und/oder eine Translationsbewegung in mindestens einer Richtung auszuführen.

8. Scheinwerfer nach einem der vorhergehenden Ansprüche, wobei die mindestens eine Laserlichtquelle (1) ein Halbleiterlaser ist.

9. Scheinwerfer nach einem der vorhergehenden Ansprüche, die mehrere Laserlichtquellen (1a, 1b, 1c) aufweist.

10. Scheinwerfer nach Anspruch 9,
wobei die mehreren Laserlichtquellen (1a, 1b, 1c) verschiedene Farben zur Erzeugung von Weißlicht durch additive Farbmischung aufweisen.

11. Scheinwerfer nach einem Ansprüche 1 bis 9,
wobei die mindestens eine Laserlichtquelle (1) blaues Licht oder ultraviolettes Licht emittiert, und wobei im Strahlengang zur Erzeugung von Weißlicht ein Konversionselement (10) angeordnet ist, dass einen Teil des emittierten blauen oder ultravioletten Lichts in Strahlung einer größeren Wellenlänge konvertiert.

12. Scheinwerfer nach einem der vorherigen Ansprüche, wobei der Scheinwerfer ein Kfz-Scheinwerfer ist.

## Claims

1. A headlight having an optical arrangement, the optical arrangement comprising
- at least one laser light source (1),
- a diffractive optical element (3) configured to diffract light emitted from the laser light source (1) into a plurality of diffraction orders, wherein a predominant part of the light is diffracted into the first diffraction order (6b), and
- at least one diaphragm (7) which transmits the light of the first diffraction order and absorbs light in diffraction orders (6a, 6c, 6d) outside the first diffraction order (6b),
wherein a phase function of the diffractive optical element (3) is calculated such that at least 80% of the light power emitted by the at least one laser light source (1) is diffracted into the first diffraction order.

2. The headlight according to claim 1,
wherein the diffractive optical element (3) comprises a time-variable diffraction structure.

3. The headlight according to claim 2,
wherein the diffractive optical element (3) is a phase-shifting LCoS display or a phase-shifting micromirror array.

4. The headlight according to claim 1,
wherein the diffractive optical element (3) comprises a static diffraction structure.

5. The headlight according to claim 4,
wherein the diffractive optical element (3) is a surface grating or a computer-generated hologram.

6. The headlight according to any one of the preceding claims,
wherein the diffractive optical element (3) is configured to perform a rotational movement about at least one axis and/or a translational movement in at least one direction.

7. The headlight according to any one of the preceding claims,
wherein a lens (4) for generating an intermediate image (6) of the light diffracted at the diffractive optical element (3) is arranged in the beam path downstream of the diffractive optical element (3),
and wherein the lens (4) is configured to perform a rotational movement about at least one axis and/or a translational movement in at least one direction.

8. The headlight according to any one of the preceding claims,
wherein the at least one laser light source (1) is a semiconductor laser.

9. The headlight according to any one of the preceding claims,
comprising a plurality of laser light sources (1a, 1b, 1c).

10. The headlight according to claim 9,
wherein the plurality of laser light sources (1a, 1b, 1c) comprise different colors for generating white light by additive color mixing.

11. The headlight according to any one of claims 1 to 9,
wherein the at least one laser light source (1) emits blue light or ultraviolet light, and wherein a conversion element (10) is arranged in the beam path for generating white light, which converts a part of the emitted blue or ultraviolet light into radiation of a longer wavelength.

12. The headlight according to any one of the preceding claims,
wherein the headlight is a motor vehicle headlight.

## Revendications

1. Un phare avec un arrangement optique, l'arrangement optique comprenant :
- au moins une source de lumière laser (1),
- un élément optique diffractif (3) configuré pour diffracter la lumière émise par la source de lumière laser (1) dans plusieurs ordres de diffraction, une partie prédominante de la lumière étant diffractée dans le premier ordre de diffraction (6b), et
- au moins un diaphragme (7) qui laisse passer la lumière du premier ordre de diffraction et absorbe la lumière dans des ordres de diffraction (6a, 6c, 6d) en dehors du premier ordre de diffraction (6b),
dans lequel une fonction de phase de l'élément optique diffractif (3) est calculée de manière à ce qu'au moins 80 % de la puissance lumineuse émise par ladite au moins une source de lumière laser (1) soit diffractée dans le premier ordre de diffraction.

2. Le phare selon la revendication 1,
dans lequel l'élément optique diffractif (3) comprend une structure de diffraction variable dans le temps.

3. Le phare selon la revendication 2,
dans lequel l'élément optique diffractif (3) est un affichage LCoS à déphasage ou un réseau de micro-miroirs à déphasage.

4. Le phare selon la revendication 1,
dans lequel l'élément optique diffractif (3) comprend une structure de diffraction statique.

5. Le phare selon la revendication 4,
dans lequel l'élément optique diffractif (3) est un réseau de surface ou un hologramme généré par ordinateur.

6. Le phare selon l'une quelconque des revendications précédentes,
dans lequel l'élément optique diffractif (3) est configuré pour effectuer un mouvement de rotation autour d'au moins un axe et/ou un mouvement de translation dans au moins une direction.

7. Le phare selon l'une quelconque des revendications précédentes,
dans lequel une lentille (4) est disposée sur le trajet du faisceau en aval de l'élément optique diffractif (3) pour produire une image intermédiaire (6) de la lumière diffractée par l'élément optique diffractif (3),
et dans lequel la lentille (4) est configurée pour effectuer un mouvement de rotation autour d'au moins un axe et/ou un mouvement de translation dans au moins une direction.

8. Le phare selon l'une quelconque des revendications précédentes,
Dans lequel ladite au moins une source de lumière laser (1) est un laser à semi-conducteur.

9. Le phare selon l'une quelconque des revendications précédentes,
comprenant plusieurs sources de lumière laser (1a, 1b, 1c).

10. Le phare selon la revendication 9,
dans lequel la pluralité de sources de lumière laser (1a, 1b, 1c) comprend des couleurs différentes pour produire une lumière blanche par mélange additif de couleurs.

11. Le phare selon l'une quelconque des revendications 1 à 9, dans lequel la au moins une source de lumière laser (1) émet de la lumière bleue ou de la lumière ultraviolette, et dans lequel un élément de conversion (10) est disposé dans le trajet du faisceau pour produire de la lumière blanche, lequel élément de conversion convertissant une partie de la lumière bleue ou ultraviolette émise en rayonnement d'une longueur d'onde supérieure.

12. Le phare selon l'une quelconque des revendications précédentes,
dans lequel le phare est un phare de véhicule automobile.
